# EUROPEAN PATENT SPECIFICATION

(11) **EP 2 781 838 B1**
(45) Date of publication and mention of the grant of the patent: **24.04.2019**
(21) Application number: 12850002.2
(22) Date of filing: 14.11.2012
(51) Int. Cl.: F23R 3/60, F02C 7/00, F02C 7/20, F23R 3/28, F23R 3/42

(54) **GAS TURBINE COMBUSTOR**
GASTURBINENBRENNKAMMER
CHAMBRE DE COMBUSTION DE TURBINE À GAZ

(30) Priority: 16.11.2011 JP 2011250242
(43) Date of publication of application: 24.09.2014
(73) Proprietor: Mitsubishi Hitachi Power Systems, Ltd., Yokohama 220-8401 (JP)
(72) Inventor: SAITO, Toshihiko, Tokyo 108-8215 (JP); AKAMATSU, Shinji, Tokyo 108-8215 (JP); ABE, Naoki, Tokyo 108-8215 (JP)
(74) Representative: Henkel, Breuer & Partner
(86) International application number: PCT/JP2012/079457
(87) International publication number: WO 2013/073549

(56) References cited:
- JP-A- S5 691 132
- JP-A- H09 500 189
- JP-A- 2007 232 350
- JP-A- 2011 208 929
- JP-A- 2011 208 929
- US-A- 4 408 461
- US-A- 5 323 605
- US-A1- 2003 217 556
- US-A1- 2003 217 556

## Description

### TECHNICAL FIELD

The present invention relates to a gas turbine combustor in which a pilot burner and main burners are supported on a combustor swirler basket by means of a disc-shaped base plate.

### BACKGROUND ART

In recent years, gas turbine combustors employing a premix combustion method have been increasing in number for reducing NOx and other purposes. These gas turbine combustors employing a premix combustion method include main burners (premix burners) configured to perform premix combustion and also a pilot burner configured to perform diffusion combustion. In this way, diffusion flame produced by the pilot burner can be used as pilot flame for the main burners to produce premix flame. Accordingly, the premix combustion can be performed stably.

Thus, as a burner arrangement for the stable premix combustion, the above-described conventional gas turbine combustors employ an arrangement in which multiple main burners surround a pilot burner. Moreover, the pilot burner and the main burners thus arranged are attached to the inner peripheral surface of a combustor swirler basket by means of a disc-shaped base plate.

Moreover, as a structure for attacking the base plate, a structure in which an outer peripheral portion of the base plate is welded to the inner peripheral surface of the combustor swirler basket has conventionally been employed. However, employing this base-plate attachment structure will require detachment and attachment of the base plate for repair of the burners and the base plate when they are damaged by flashback and for modification and replacement of the burners due to change in combustion specifications. Hence, the maintainability is lowered. Further, as the base plate and the combustor swirler basket are welded repeatedly, the base plate and the combustor swirler basket become easily strained by the welding. Consequently, the accuracy of attachment of the burners may possibly be lowered.

Meanwhile, JP 2002-98116A discloses a gas turbine combustor in which outer peripheral portions of casings are fixed to each other with bolts.

US 4408461A discloses a combustion chamber of a gas turbine with pre-mixing and pre-evaporation elements. A support bridge or support element in the form of a plate supporting a number of tubular-shaped elements forming the pilot and main burners of the combustor is anchored to a support rib with a square cross sectional shape radially protruding inward from an inner peripheral surface of the combustor cylinder. The support rib is not further described, neither is the manner how the support element is anchored to the support rib.

JP 2011-208929A teaches a connection of nozzle cylinders to an inner peripheral wall of the combustion cylinder by bolts inserted from the downstream side of the burner.

### SUMMARY OF THE INVENTION

### PROBLEM TO BE SOLVED BY THE INVENTION

Here, it may be possible to employ a casing attachment structure like the one of the conventional gas turbine combustor described above as the base plate attachment structure. However, the attachment of the base plate is performed, not outside the casings, but inside the combustor swirler basket, and therefore the maintainability needs to be considered further.

Thus, the present invention has been made for solving the above problem, and an object thereof is to provide a gas turbine combustor capable of improving its maintainability by enabling easy attachment and detachment of a base plate that supports a pilot burner and main burners.

### MEANS FOR SOLVING THE PROBLEMS

A gas turbine combustor according to the present invention for solving the above problem has the features of claim 1.

### EFFECT OF THE INVENTION

Thus, in the gas turbine combustor according to the present invention, the base plate is engaged with the engaging portion protruding from the inner peripheral surface of the combustor swirler basket, and the base plate and any one of the engaging portion and the inner peripheral surface are fixed to each other with the bolt. This enables easy attachment and detachment of the base plate that supports the pilot burner and the main burners. Accordingly, the maintainability can be improved.

### BRIEF DESCRIPTION OF THE DRAWINGS

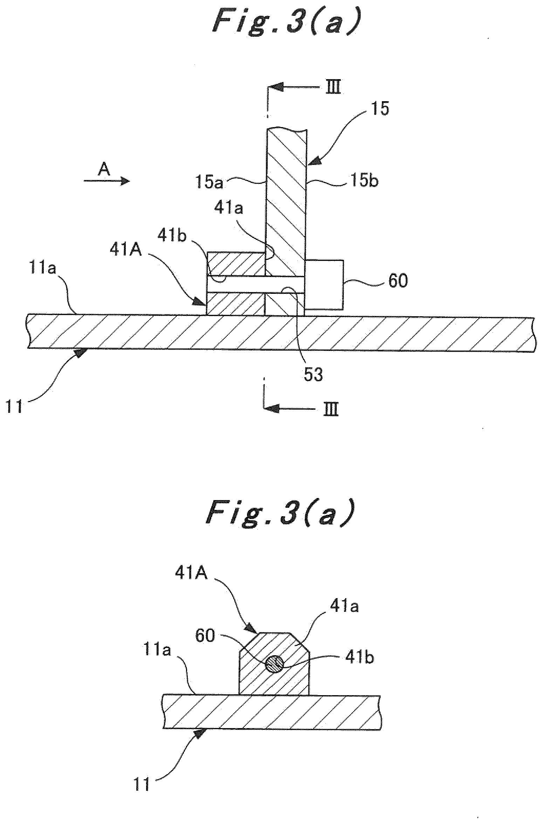

Fig. 1 is a schematic structure diagram of a gas turbine combustor according to one embodiment of the present invention.
Fig. 2 is a front view of a base plate.
Part (a) of Fig. 3 is a view showing the structure of attachment of a base plate in a gas turbine combustor according to a first example serving to explain features of the present invention. Part (b) of Fig. 3 is a cross-sectional view taken along III-III line in Part (a) and seen in the direction of arrows III in Part (a).

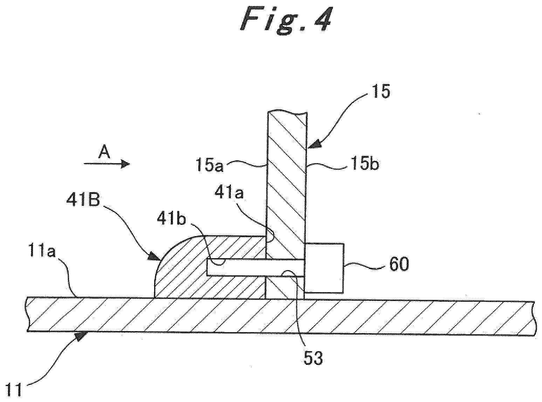

Fig. 4 is a view showing the structure of attachment of a base plate in a gas turbine combustor according to a second example serving to explain features of the present invention.

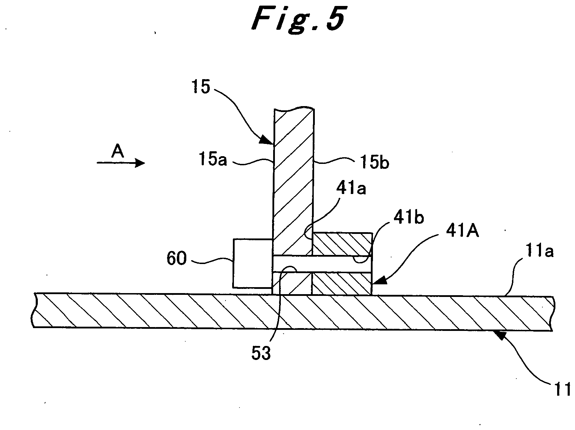

Fig. 5 is a view showing the structure of attachment of a base plate in a gas turbine combustor according to a third example serving to explain features of the present invention.

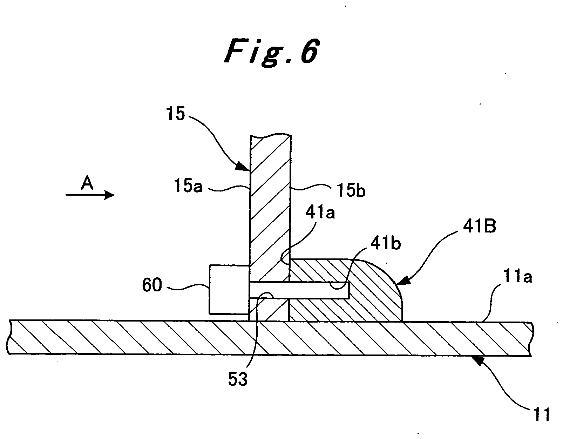

Fig. 6 is a view showing the structure of attachment of a base plate in a gas turbine combustor according to a first embodiment of the present invention.

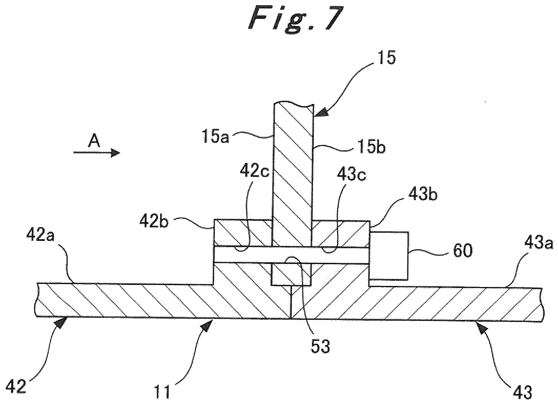

Fig. 7 is a view showing the structure of attachment of a base plate in a gas turbine combustor according to a fourth example serving to explain features of the present invention.

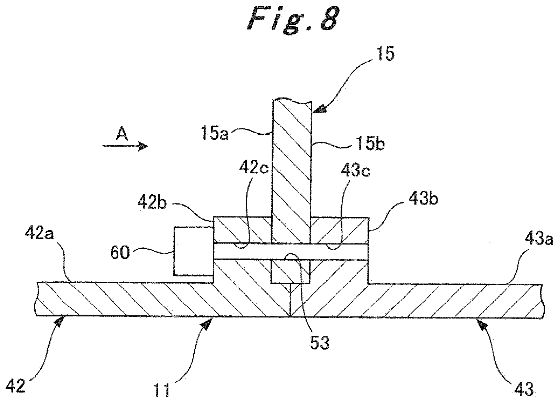

Fig. 8 is a view showing the structure of attachment of a base plate in a gas turbine combustor according to a fifth example serving to explain features of the present invention.

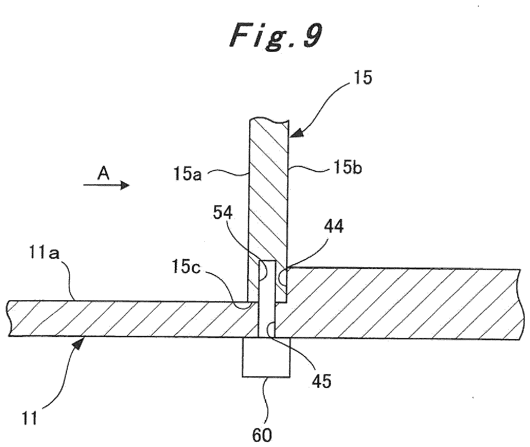

Fig. 9 is a view showing the structure of attachment of a base plate in a gas turbine combustor according to a sixth example serving to explain features of the present invention.

### MODES FOR CARRYING OUT THE INVENTION

Hereinbelow, a gas turbine combustor according to the present invention will be described in detail with reference to the drawings.

### EMBODIMENTS

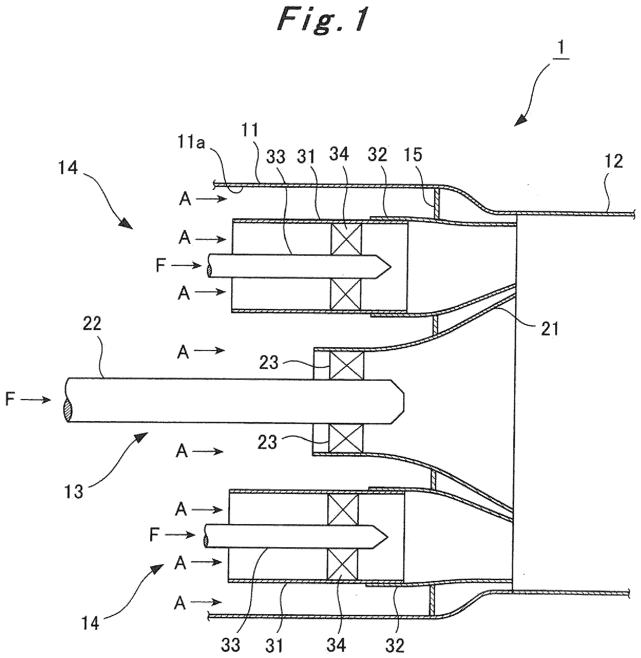

First, a gas turbine combustor according to a first example serving to explain features of the embodiments of the present invention will be described in detail with reference to Figs. 1 to 3.

As shown in Fig. 1, a combustor 1 for a gas turbine is one employing a premix combustion method, and includes a combustor swirler basket 11 in which fuel F and compressed air A for combustion are mixed and a combustor tail tube 12 in which the mixture of the fuel F and the compressed air A is combusted. Specifically, the combustor 1 is formed by connecting a downstream opening end portion of the combustor swirler basket 11 and an upstream opening end portion of the combustor tail tube 12. Note that the terms upstream and downstream represent directions based on the flow of the fuel F and the compressed air A.

Further, a pilot burner 13 and multiple main burners (premix burners) 14 are provided inside the combustor swirler basket 11. Moreover, the pilot burner 13 and the main burners 14 are supported on an inner peripheral surface 11a of the combustor swirler basket 11 by means of a disc-shaped base plate 15.

The pilot burner 13 is disposed in the center of the combustor swirler basket 11 and includes a pilot cone 21, a pilot nozzle 22, and a pilot swirler 23. The pilot nozzle 22 is inserted in the pilot cone 21 in such a way as to be coaxial with the pilot cone 21. Moreover, the pilot swirler 23 is interposed between the inner peripheral surface of the pilot cone 21 and the outer peripheral surface of the pilot nozzle 22.

Meanwhile, there are eight main burners 14 provided radially outside the pilot burner 13 at an equal angular interval along the circumferential direction of the inner peripheral surface 11a of the combustor swirler basket 11. Each main burner 14 includes a swirler tube 31, an extension pipe 32, a main nozzle (premix nozzle) 33, and a main swirler 34. The main nozzle 33 is inserted in the swirler tube 31 and the extension pipe 32 in such a way as to be coaxial with the swirler tube 31 and the extension pipe 32. Moreover, the main swirler 34 is interposed between the inner peripheral surface of the swirler tube 31 and the outer peripheral surface of the main nozzle 33.

Thus, during operation of the combustor 1, the compressed air A at high temperature and high pressure flows into the upstream opening end portion of the combustor swirler basket 11, and is then supplied into and around the pilot burner 13 and also into and around the main burners 14. At the same time, the fuel F is also supplied into the pilot nozzle 22 of the pilot burner 13 and the main nozzles 33 of the main burners 14.

As a result, in the pilot burner 13, first, the supplied compressed air A is swirled by the pilot swirler 23 to be mixed to the fuel F injected from the pilot nozzle 22. Thereafter, the fuel-air mixture obtained by the mixing is ignited, so that diffusion combustion is performed inside the pilot cone 21 and the downstream side (inside the combustor tail tube 12). Then, the combusted gas produced by the diffusion combustion is supplied downstream inside the combustor tail tube 12.

Moreover, in each main burner 14, first, the supplied compressed air A is swirled by the main swirler 34 to be mixed to the fuel F injected from the main nozzle 33. Thereafter, the premixed fuel-air mixture obtained by the mixing is caused to swirl and flow toward the inside of the combustor tail tube 12 from the extension pipe 32. As a result, flame of the premixed fuel-air mixture is stabilized by the diffusion flame produced by the pilot burner 13, so that the premix combustion is performed stably. Then, the combusted gas produced by this premix combustion is supplied downstream inside the combustor tail tube 12.

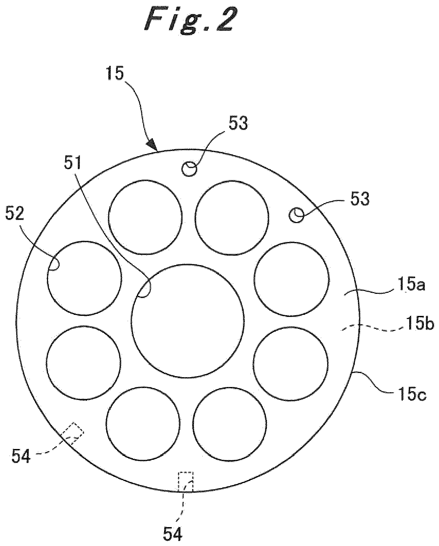

Meanwhile, as shown in Fig. 2, a support hole 51 for the pilot burner 13 and support holes 52 for the main burners 14 are formed in the base plate 15. Specifically, the support hole 51 is bored in the center of the base plate 15, and the pilot cone 21 of the pilot burner 13 penetrates through and is supported on the support hole 51. Moreover, the support holes 52 are bored around the support hole 51, and the extension pipes 32 of the main burners 14 penetrate through and are supported on the support holes 52.

Further, as shown in Fig. 2 and Part (a) of Fig. 3, multiple bolt holes 53 are formed in an outer peripheral portion of the base plate 15 (radially outside the support holes 52). These bolt holes 53 are through-holes penetrating the base plate 15 between its upstream surface 15a and downstream surface 15b in the thickness direction, and are disposed at an equal angular interval along the circumferential direction of the base plate 15. Note that, of the multiple bolt holes 53, two bolt holes 53 are representatively illustrated in Fig. 2.

On the other hand, as shown in Parts (a) and (b) of Fig. 3, multiple bolt receiving members (engaging portion) 41A are provided on the inner peripheral surface 11a of the combustor swirler basket 11 at the same interval as the interval of the bolt holes 53 along the circumferential direction of the inner peripheral surface 11a. These bolt receiving members 41A protrude radially inward from the inner peripheral surface 11a, and a bolt hole 41b is bored in an end surface 41a of each bolt receiving member 41A.

Moreover, the upstream surface 15a of the base plate 15 is engaged with the end surfaces 41a of the bolt receiving members 41A such that the bolt holes 41b and the bolt holes 53 communicate with each other. The base plate 15 and the bolt receiving members 41A in this engaged state are fixed to each other in the thickness direction of the base plate 15 with bolts 60.

Specifically, the base plate 15 can be fixed to the bolt receiving members 41A by engaging the upstream surface 15a of the base plate 15 with the end surfaces 41a of the bolt receiving members 41A and inserting the bolts 60 into the bolt holes 41b and 53 from the downstream surface 15b side.

Thus, the base plate 15 can be easily attached and detached by providing the bolt receiving members 41A on the inner peripheral surface 11a of the combustor swirler basket 11 and fixing the bolt receiving members 41A and the base plate 15 with the bolts 60. Accordingly, the maintainability of the pilot burner 13, the main burners 14, and the base plate 15 can be improved.

Moreover, since the upstream surface 15a of the base plate 15 is engaged with the end surfaces 41a of the bolt receiving members 41A, and the bolts 60 are made attachable and detachable from the downstream surface 15b side of the base plate 15, the attachment and detachment of the bolts 60 can be easily done via the downstream opening end portion of the combustor swirler basket 11.

Next, a gas turbine combustor according to a second example serving to explain features of the present invention will be described in detail with reference to Fig. 4.

As shown in Fig. 4, each bolt receiving member 41B protrudes radially inward from an inner peripheral surface 11a, and its upstream end portion has a cross section curving in such a streamlined shape as to gradually narrow as extending in a longitudinal direction (upstream in the flow direction).

Thus, by making each bolt receiving member 41B in the streamlined shape, compressed air A supplied in a combustor swirler basket 11 can flow without being disturbed. Accordingly, the generation of the wake (low flow speed region) of the compressed air A by the bolt receiving member 41B can be reduced.

Next, a gas turbine combustor according to a third example serving to explain features of the present invention will be described in detail with reference to Fig. 5.

As shown in Fig. 5, a downstream surface 15b of a base plate 15 is engaged with end surfaces 41a of bolt receiving members 41A such that bolt holes 41b and bolt holes 53 communicate with each other. Moreover, the base plate 15 and the bolt receiving members 41A in this engaged state are fixed to each other in the thickness direction of the base plate 15 with bolts 60.

Specifically, the base plate 15 can be fixed to the bolt receiving members 41A by engaging the downstream surface 15b of the base plate 15 with the end surfaces 41a of the bolt receiving members 41A and inserting the bolts 60 into the bolt holes 41b and 53 from the upstream surface 15a side.

Thus, the base plate 15 can be easily attached and detached. Accordingly, the maintainability of a pilot burner 13, main burners 14, and the base plate 15 can be improved.

Moreover, the downstream surface 15b of the base plate 15 is engaged with the end surfaces 41a of the bolt receiving members 41A, and the bolts 60 are made attachable and detachable from the upstream surface 15a side of the base plate 15. In this way, even if bolts 60 come off from their bolt holes 41b and 53, it is possible to prevent these bolts 60 that have come off from entering the combustion region and to prevent the base plate 15 from tilting toward the combustion region.

Next, a gas turbine combustor according to a first embodiment of the present invention will be described in detail with reference to Fig. 6.

As shown in Fig. 6, each bolt receiving member 41B protrudes radially inward from an inner peripheral surface 11a, and its downstream end portion has a cross section curving in such a streamlined shape as to gradually narrow as extending in a longitudinal direction (downstream in the flow direction).

Thus, by making each bolt receiving member 41B in the streamlined shape, compressed air A supplied in a combustor swirler basket 11 can flow without being disturbed. Accordingly, the generation of the wake (low flow speed region) of the compressed air A by the bolt receiving member 41B can be reduced.

Next, a gas turbine combustor according to a fourth example serving to explain features of the present invention will be described in detail with reference to Fig. 7.

As shown in Fig. 7, a combustor swirler basket 11 includes an upstream inner tube 42 and a downstream inner tube 43. Specifically, the combustor swirler basket 11 is formed by connecting a downstream opening end portion of the upstream inner tube 42 and an upstream opening end portion of the downstream inner tube 43.

An annular protruding portion (engaging portion) 42b of an annular shape is formed on an inner peripheral surface 42a of the upstream inner tube 42. This annular protruding portion 42b protrudes radially inward from the inner peripheral surface 42a and is formed along the circumferential direction of the inner peripheral surface 42a. Moreover, multiple bolt holes 42c are formed in the annular protruding portion 42b at the same interval as the interval of bolt holes 53 along the circumferential direction.

On the other hand, an annular protruding portion (engaging portion) 43b of an annular shape is formed on an inner peripheral surface 43a of the downstream inner tube 43. This annular protruding portion 43b protrudes radially inward from the inner peripheral surface 43a and is formed along the circumferential direction of the inner peripheral surface 43a. Moreover, multiple bolt holes 43c are formed in the annular protruding portion 43b at the same interval as the interval of the bolt holes 53 along the circumferential direction.

Specifically, the combustor swirler basket 11 is such that the annular protruding portions 42b and 43b are disposed side by side in the axial direction of the combustor swirler basket 11 and the bolt holes 42c and 43c are disposed coaxially with each other by bringing the downstream opening end portion of the upstream inner tube 42 and the upstream opening end portion of the downstream inner tube 43 into contact with each other. Here, a gap equivalent to the thickness of a base plate 15 is formed between the annular protruding portions 42b and 43b.

Moreover, the base plate 15 is engaged between the annular protruding portions 42b and 43b such that the bolt holes 42c and 43c and the bolt holes 53 communicate with each other. The base plate 15 and the annular protruding portions 42b and 43b in this engaged state are fixed to each other in the thickness direction of the base plate 15 with bolts 60.

In other words, the base plate 15 is held between the annular protruding portions 42b and 43b when the upstream inner tube 42 and the downstream inner tube 43 are brought into contact with each other, and the bolts 60 are inserted into the bolt holes 42c, 43c, and 53 from a downstream surface 15b side. In this way, the base plate 15 can be fixed to the annular protruding portions 42b and 43b at the same time as when the upstream inner tube 42 and the downstream inner tube 43 are connected.

Thus, to form the combustor swirler basket 11 by bringing the upstream inner tube 42 and the downstream inner tube 43 into contact with each other, the base plate 15 is engaged between the annular protruding portions 42b and 43b formed on the inner peripheral surfaces 42a and 43a, and the base plate 15 and the annular protruding portions 42b and 43b in this state are fixed to each other with the bolts 60. In this way, the base plate 15 can be easily attached and detached. Accordingly, the maintainability of a pilot burner 13, main burners 14, and the base plate 15 can be improved.

Moreover, since the base plate 15 is engaged between the annular protruding portions 42b and 43b, and the bolts 60 are made attachable and detachable from the downstream surface 15b side of the base plate 15, the attachment and detachment of the bolts 60 can be easily done via a downstream opening end portion of the combustor swirler basket 11.

Next, a gas turbine combustor according to a fifth example serving to explain features of the present invention will be described in detail with reference to Fig. 8.

As shown in Fig. 8, a base plate 15 is engaged between annular protruding portions 42 and 43 such that bolt holes 42c and 43c and bolt holes 53 communicate with each other. Moreover, the base plate 15 and the annular protruding portions 42 and 43 in this engaged state are fixed to each other in the thickness direction of the base plate 15 with bolts 60.

In other words, the base plate 15 is held between annular protruding portions 42b and 43b when the upstream inner tube 42 and the downstream inner tube 43 are brought into contact with each other, and the bolts 60 are inserted into the bolt holes 42c, 43c, and 53 from an upstream surface 15a side. In this way, the base plate 15 can be fixed to the annular protruding portions 42b and 43b at the same time as when the upstream inner tube 42 and the downstream inner tube 43 are connected.

Thus, the base plate 15 can be easily attached and detached. Accordingly, the maintainability of a pilot burner 13, main burners 14, and the base plate 15 can be improved.

Next, a gas turbine combustor according to a sixth example serving to explain features of the present invention will be described in detail with reference to Fig. 9.

As shown in Figs. 2 and 9, multiple bolt holes 54 are formed in an outer peripheral portion of a base plate 15 (radially outside support holes 52) . These bolt holes 54 are blind holes radially penetrating the base plate 15 from its outer peripheral end surface 15c, and are disposed at an equal angular interval along the circumferential direction of the base plate 15. Note that, of the multiple bolt holes 54, two bolt holes 54 are representatively illustrated in Fig. 2.

On the other hand, as shown in Fig. 9, an annular step portion (engaging portion) 44 of an annular shape is formed on an inner peripheral surface 11a of a combustor swirler basket 11. This annular step portion 44 protrudes radially inward from the inner peripheral surface 11a, and is formed along the circumferential direction of the inner peripheral surface 11a.

Further, multiple bolt holes 45 are formed in the inner peripheral surface 11a immediately below the annular step portion 44. These bolt holes 45 are through-holes radially penetrating through the combustor swirler basket 11 and are formed at the same interval as the interval of the bolt holes 54.

Moreover, the base plate 15 is engaged with the annular step portion 44 such that the bolt holes 45 and the bolt holes 54 communicate with each other. The combustor swirler basket 11 and the base plate 15 in this engaged state are fixed to each other in the radial direction with bolts 60.

Specifically, the base plate 15 can be fixed to the inner peripheral surface 11a of the combustor swirler basket 11 by engaging the base plate 15 with the annular step portion 44 and inserting the bolts 60 into the bolt holes 45 and 54 from radially outside the combustor swirler basket 11.

Thus, the base plate 15 can be easily attached and detached by forming the annular step portion 44 on the inner peripheral surface 11a of the combustor swirler basket 11, engaging the annular step portion 44 and the base plate 15 with each other, and fixing the inner peripheral surface 11a of the combustor swirler basket 11 and the outer peripheral end surface 15c of the base plate 15 to each other. Accordingly, the maintainability of a pilot burner 13, main burners 14, and the base plate 15 can be improved.

Moreover, since the inner peripheral surface 11a of the combustor swirler basket 11 and the outer peripheral end surface 15c of the base plate 15 are fixed with the bolts 60, the bolts 60 are not disposed inside the combustor swirler basket 11. Accordingly, compressed air A supplied in the combustor swirler basket 11 can flow without being disturbed.

### INDUSTRIAL APPLICABILITY

The present invention is applicable to gas turbine combustors in which a pilot burner and main burners can be attached accurately.

## Claims

1. A gas turbine combustor, comprising:
a combustor swirler basket (11) ;
a pilot burner (13) disposed in a center of the combustor swirler basket (11);
a plurality of main burners (14) disposed radially outside the pilot burner (13) along a circumferential direction of an inner peripheral surface (11a) of the combustor swirler basket (11);
a base plate (15) disposed inside the combustor swirler basket (11) and supporting the pilot burner (13) and the main burners (14);
a bolt (60); and
a bolt receiving portion (41B) protruding radially inward from the inner peripheral surface (11a) and engaged with the base plate (15),
wherein the base plate (15) has an upstream surface (15a) disposed upstream in a direction of flow of compressed air (A) to be supplied to the combustor swirler basket (11), and a downstream surface (15b),
wherein a downstream end portion of the bolt receiving portion (41B) has a cross section curving in such a streamlined shape along the direction of the flow of the compressed air to gradually narrow as extending downstream in the direction of the flow,
wherein the downstream surface (15b) of the base plate (15) engages with an end surface (41a) of the bolt receiving portion (41B), and
wherein the base plate (15) and the bolt receiving portion (41B) are fixed to each other with the bolt (60) inserted from the upstream surface (15a) side.

## Patentansprüche

1. Eine Gasturbinenbrennkammer mit:
einem Brennkammer-Verwirblerkorb (11),
einem Pilotbrenner (13), der in einer Mitte des Brennkammer-Verwirblerkorbs (11) angeordnet ist,
einer Vielzahl von Hauptbrennern (14), die radial außerhalb des Pilotbrenners (13) entlang einer Umfangsrichtung einer inneren Umfangsoberfläche (11a) des Brennkammer-Verwirblerkorbs (11) angeordnet sind,
einer Basisplatte (15), die im Inneren des Brennkammer-Verwirblerkorbs (11) angeordnet ist und den Pilotbrenner (13) und die Hauptbrenner (14) trägt,
einem Bolzen (60), und
einem Bolzen-Aufnahmeabschnitt (41B), der radial einwärts von der inneren Umfangsoberfläche (11a) vorsteht und mit der Basisplatte (15) in Eingriff ist,
wobei die Basisplatte (15) eine stromaufwärtige Oberfläche (15a), die stromauf in einer Richtung einer Strömung von komprimierter Luft (A), die dem Brennkammer-Verwirblerkorb (11) zuzuführen ist, angeordnet ist, und eine stromabwärtige Oberfläche (15b) besitzt,
wobei ein stromabwärtiger Endabschnitt des Bolzen-Aufnahmeabschnitts (41B) einen Querschnitt besitzt, der in einer solchen stromlinigen Form entlang der Richtung der Strömung der komprimierten Luft gekrümmt ist, dass er sich allmählich verengt, während er sich stromab in der Richtung der Strömung erstreckt,
wobei die stromabwärtige Oberfläche (15b) der Basisplatte (15) mit einer Endoberfläche (41a) des Bolzen-Aufnahmeabschnitts (41B) in Eingriff ist, und
wobei die Basisplatte (15) und der Bolzen-Aufnahmeabschnitt (41B) aneinander mit dem Bolzen (60) befestigt sind, welcher von der Seite der stromaufwärtigen Oberfläche (15a) eingesetzt ist.

## Revendications

1. Chambre de combustion d'une turbine à gaz, comprenant :
un panier (11) de dispositif de turbulence d'une chambre de combustion ;
un brûleur (13) pilote disposé au centre du panier (11) de dispositif de turbulence de la chambre de combustion ;
une pluralité de brûleurs (14) principaux disposés radialement à l'extérieur du brûleur (13) pilote suivant une direction circonférentielle d'une surface (11a) périphérique intérieure du panier (11) du dispositif de turbulence de la chambre de combustion ;
une plaque (15) de base disposée à l'intérieur du panier (11) du dispositif de turbulence de la chambre de combustion et supportant le brûleur (13) pilote et les brûleurs (14) principaux ;
un boulon (60) et
une partie (41B) de réception du boulon faisant saillie radialement vers l'intérieur à partir de la surface (11a) périphérique intérieure et coopérant avec la plaque (15) de base,
la plaque (15) de base ayant une surface (15a) en amont disposée en amont, dans un sens d'écoulement d'air (A) comprimé à envoyer au panier (11) du dispositif de turbulence de la chambre de combustion, et une surface (15b) en aval,
une partie, d'extrémité en aval, de la partie (41B) de réception du boulon ayant une section transversale s'incurvant suivant une forme aérodynamique selon le sens de l'écoulement de l'air comprimé, de manière à se rétrécir peu à peu au fur et à mesure qu'elle s'étend vers l'aval dans le sens de l'écoulement,
la surface (15b) en aval de la plaque (15) de base coopérant avec une surface (41a) d'extrémité de la partie (41B) de réception du boulon et
la plaque (15) de base et la partie (41B) de réception du boulon sont fixées l'une à l'autre par le boulon (60) inséré à partir du côté de la surface (15a) en amont.
